# EUROPÄISCHE PATENTSCHRIFT

(11) **EP 1 266 157 B1**
(45) Veröffentlichungstag und Bekanntmachung des Hinweises auf die Patenterteilung: **24.03.2004**
(21) Anmeldenummer: 01907411.1
(22) Anmeldetag: 08.01.2001
(51) Int. Cl.: F16J 15/32

(54) **ABSTREIFER MIT INTEGRIERTER DICHTUNG**
SCRAPER WITH INTEGRATED SEAL
RACLEUR AVEC JOINT INTEGRE

(30) Priorität: 07.03.2000 DE 10010524
(43) Veröffentlichungstag der Anmeldung: 18.12.2002
(73) Patentinhaber: Carl Freudenberg KG, 69469 Weinheim (DE)
(72) Erfinder: SIEGRIST, Uwe, 34633 Ottrau (DE); BRAUN, Otmar, 34621 Frielendorf (DE)
(86) Internationale Anmeldenummer: PCT/EP2001/000103
(87) Internationale Veröffentlichungsnummer: WO 2001/066980

(56) Entgegenhaltungen:
- DE-A- 3 528 961
- DE-U- 7 220 827
- US-A- 4 106 781
- US-A- 4 399 998
- US-A- 4 448 461
- US-A- 4 522 411
- US-A- 4 616 836
- US-A- 5 167 419

## Beschreibung

### Technisches Gebiet

Die Erfindung betrifft einen Abstreifer mit integrierter Dichtung. Eine derartige Dichtung ist aus der Druckschrift US-A-5 167 419 bekannt.

### Stand der Technik

Ein solcher Abstreifer ist weiterhin aus der DE 296 16 242 U1 bekannt. Der Doppelabstreifer ist zur Abdichtung eines beweglichen Teils gegenüber einem Drucksystem vorgesehen, wobei der Doppelabstreifer das bewegliche Teil als Ring umfaßt. Zwischen den beiden Stirnseiten des Doppelabstreifers wird bei Überschreitung eines Öffnungsdrucks im Drucksystem eine Verbindung hergestellt.

### Darstellung der Erfindung

Der Erfindung liegt die Aufgabe zugrunde, einen Abstreifer der eingangs genannten Art derart weiterzuentwickeln, daß der Abstreifer mit integrierter Dichtung druckentlastet ist und daß ein Eindringen von Schmutz und Feuchtigkeit entlang von quasi-statischen Dichtlippen in Richtung des abzudichtenden Raums sicher vermieden wird.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist ein Abstreifer mit integrierter Dichtung vorgesehen, umfassend zumindest eine in Richtung des abzudichtenden Raums angeordnete, dynamisch beanspruchte erste Dichtlippe und zumindest eine auf der dem abzudichtenden Raum abgewandten Seite angeordnete Abstreiflippe sowie drei quasi-statisch beanspruchte zweite, dritte und vierte Dichtlippen, die jeweils an zumindest einer Gegenfläche des Einbauraums des Abstreifers mit integrierter Dichtung anlegbar sind, wobei die zweite Dichtlippe flüssigkeitsleitend, die dritte und vierte Dichtlippe jeweils als Überdruckventil ausgebildet und in einer funktionstechnischen Reihenschaltung angeordnet sind Durch die Anordnung der quasi-statisch beanspruchten Dichtlippen in einer funktionstechnischen Reihenschaltung haben diese im wesentlichen die Funktion einer Labyrinthdichtung und verhindern dadurch wirkungsvoll ein Eindringen von Verunreinigungen aus der Umgebung an den quasi-statisch beanspruchten Dichtlippen vorbei in den abzudichtenden Raum.

Um unzulässig große Verlagerungen des Abstreifers mit integrierter Dichtung innerhalb seines Einbauraums zu vermeiden, ist die zweite Dichtlippe flüssigkeitsleitend, die dritte und vierte Dichtlippe als Überdruckventil ausgebildet und von ihren jeweiligen Gegenflächen abhebbar, beispielsweise bei einem Öffnungsdruck von etwa 4 bar. Eine unerwünscht große Verformung des Abstreifers und/oder Herausdrücken des Abstreifers aus seinem Einbauraum wird dadurch verhindert. Für die vorteilhafte Funktion des beanspruchten Abstreifers ist die dritte Dichtlippe, die funktionstechnisch zwischen der zweiten und der vierten Dichtlippe angeordnet ist, von wesentlicher Bedeutung. Die dritte Dichtlippe verhindert, daß Verunreinigungen aus der Umgebung an der zweiten Dichtlippe vorbei in den abzudichtenden Raum einzudringen vermögen. Selbst dann, wenn die Verunreinigungen bereits die vierte Dichtlippe passiert haben, hat dies noch keine nachteiligen Auswirkungen auf die Gebrauchseigenschaften des Abstreifers. Dadurch, daß die Verunreinigungen durch die vierte und dritte Dichtlippe sicher zurückgehalten werden, kommt die zweite Dichtlippe mit den Verunreinigungen nicht in Kontakt. Dadurch ist die zweite Dichtlippe während einer langen Gebrauchsdauer vor Verschleiß geschützt, das Eindringen von Schmutz in den abzudichtenden Raum wird wirkungsvoll verhindert.

Zur Funktion der in den Abstreifer integrierten Dichtung wird folgendes ausgeführt:

Unter normalen Betriebsbedingungen ist der abzudichtende Raum vor der in den Abstreifer integrierten Dichtung drucklos. Der Raum kann leer, partiell oder vollständig mit abzudichtendem Medium gefüllt sein, unter bestimmten Bedingungen kann das Medium auch unter geringem Druck von bis zu 4 bar stehen.

Die dritte und vierte Dichtlippe berühren die den Einbauraum begrenzende Wandung eines Gehäuses dichtend anliegend.

Die dritte Dichtlippe ist derart gestaltet, daß abzudichtendes Medium sicher auf der dem abzudichtenden Raum zugewandten Seite der zweiten Dichtlippe zurückgehalten wird; ein Flüssigkeitsdurchtritt an der dritten Dichtlippe vorbei in Richtung der vierten Dichtlippe findet bis zu dem obengenannten Druck nicht statt.

Die zweite Dichtlippe ist so gestaltet, daß sie ebenfalls anliegt, jedoch bedingt durch die Struktur ihrer Oberfläche oder kleine Unterbrechungen in der Dichtkante einen geringen zur Druckentlastung ausreichenden Volumenstrom passieren läßt.

Steigt der Druck innerhalb des abzudichtenden Raums, beispielsweise durch eine Leckage einer weiteren Dichtung, die dem Abstreifer mit integrierter Dichtung in Richtung des abzudichtenden Raums vorgeschaltet ist, über 4 bar an, erfolgt ein Volumenstrom über die zweite Dichtlippe vorbei in Richtung der dritten Dichtlippe, wobei die dritte Dichtlippe druckbedingt den Volumenstrom in Richtung der vierten Dichtlippe passieren läßt. Die vierte Dichtlippe hebt von ihrer Gegenfläche kurzzeitig ab, so daß der Volumenstrom sichtbar als Leckage in Richtung der Umgebung austritt. Die sichtbare Leckage ist ein indiz dafür, daß Dichtungen innerhalb des abzudichtenden Raums und/oder die abzudichtende Stange beschädigt/verschlissen sind und erneuert werden sollten.

Von den quasi-statisch beanspruchten Dichtlippen weist zumindest die dem abzudichtenden Raum zugewandte zweite Dichtlippe eine Oberflächenstruktur mit einer Rauhigkeit Ra von größer 2 µm auf.

Eine solche Oberflächenstruktur läßt sich beispielsweise bei Herstellung des Abstreifers mit integrierter Dichtung durch Formgebung in einem Werkzeug mit entsprechender Oberflächenrauheit erreichen. Die Oberflächenrauheit im Werkzeug kann beispielsweise durch Erodieren der entsprechenden Fläche hergestellt werden.

Eine davon abweichende Herstellung der Oberflächenstruktur ist ebenfalls denkbar, beispielsweise durch ein Strahlen der Oberfläche mit einem Granulat aus Stahl, Nichteisen-Metallen, Sand, Keramik oder Kunststoff mit einer Korngröße des Granulats von etwa 2 bis 20 µm. Durch die Oberflächenrauhigkeit ergibt sich für das abzudichtende Medium über die zweite Dichtlippe eine flüssigkeitsleitende Verbindung in Richtung der dritten Dichtlippe, ohne daß die zweite Dichtlippe von der Gegenfläche abhebt. Die Oberflächenstruktur hat also nur den Zweck eine flüssigkeitsleitende Verbindung zwischen dem abzudichtenden Raum und der dritten Dichtlippe zu ermöglichen.

Die flüssigkeitsleitende Verbindung kann auch durch eine oder mehrere Unterbrechungen, beispielsweise durch in axialer Richtung verlaufende Nuten im Bereich der zweiten Dichtkante hergestellt bzw. unterstützt werden.

Die funktionstechnisch zwischen der zweiten und der vierten Dichtlippe angeordnete dritte Dichtlippe weist bevorzugt eine Dichtkante auf, die durch zwei einander durchschneidende Kegelflächen begrenzt ist, wobei die dem abzudichtenden Raum zugewandte erste Kegelfläche mit einer zur Symmetrieachse parallel gedachten Achse einen kleineren Winkel einschließt ais die dem abzudichtenden Raum abgewandie zweite Kegelfläche. Die erste Kegelfläche schließt mit der Achse bevorzugt einen ersten Winkel von etwa 15°, die zweite Kegelfläche schließt mit der Achse bevorzugt einen zweiten Winkel von etwa 45° ein.

Die dritte Dichtkante kann glatt oder ähnlich der zweiten Dichtkante mit einer Struktur versehen sein. Durch den vergleichsweise flachen ersten Winkel und den steileren zweiten Winkel wird die dritte Dichtlippe bei Überschreitung des Öffnungsdrucks derart verformt, daß das abzudichtende Medium die dritte Dichtlippe in Richtung der vierten Dichtlippe passiert. in jedem Fall muß sichergestellt sein, daß ein Volumenstrom an der dritten Dichtlippe vorbei in Richtung der vierten Dichtlippe gelangen kann, beispielsweise durch sich im wesentlichen in radialer Richtung erstreckende Nuten innerhalb des Dichtrings zwischen der dritten und der vierten Dichtkante oder beispielsweise durch Kanäle innerhalb des Einbauraums, die auch durch eine anliegende Dichtung nicht verschließbar sind.

Der Durchtritt kann beispielsweise durch bevorzugt mehrere, gleichmäßig in Umfangsrichtung verteilte, sich in radialer Richtung erstreckende Nuten gebildet sein, die einen Bestandteil des Abstreifers mit integrierter Dichtung bilden.

Um eine gute Dichtheit zu erreichen, weist die dynamisch beanspruchte erste Dichtlippe bevorzugt eine scharf gestochene oder mit einem kleinen Radius von maximal 0.2 mm versehene Dichtkante auf; die Abstreiflippe ist bevorzugt gerundet, mit einem Radius R = 0,2. Scharfkantig ausgebildete, gestochene Abstreiflippen streifen demgegenüber zu stark ab, so daß eine unerwünschte Abstreiferleckage entsteht und daß beispielsweise das auf einer Stange befindliche abzudichtende Medium nicht wieder vollständig in Richtung des abzudichtenden Raums zurückgefördert wird.

Zur Anwendung gelangt der beanspruchte Abstreifer mit integrierter Dichtung bevorzugt in Verbindung mit einer oder mehreren vorgeschalteten Stangendichtungen, beispielsweise in Baumaschinen oder anderen Anwendungen der Mobilhydraulik.

### Kurzbeschreibung der Zeichnungen

Ein Ausführungsbeispiel eines Abstreifers mit integrierter Dichtung wird nachfolgend anhand der Figuren 1 bis 3 näher erläutert. Diese zeigen jeweils in schematischer Darstellung:
- Fig. 1: Ein Ausführungsbeispiel eines Abstreifers mit integrierter Dichtung im Profilschnitt als Einzelteil in der herstellungsbedingten Form,
- Fig. 2: Ein Ausführungsbeispiel eines Abstreifers mit integrierter Dichtung in Draufsicht der zur Umgebung gerichteten Seite (Abstreiferseite) als Einzelteil in der herstellungsbedingten Form,
- Fig. 3: den Abstreifer mit integrierter Dichtung aus Fig. 1 im eingebauten Zustand in Verbindung mit einer vorgeschalteten Stangendichtung.

### Ausführung der Erfindung

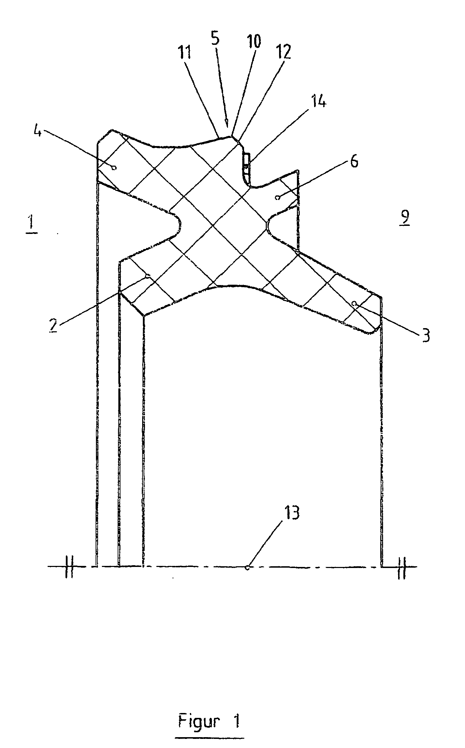

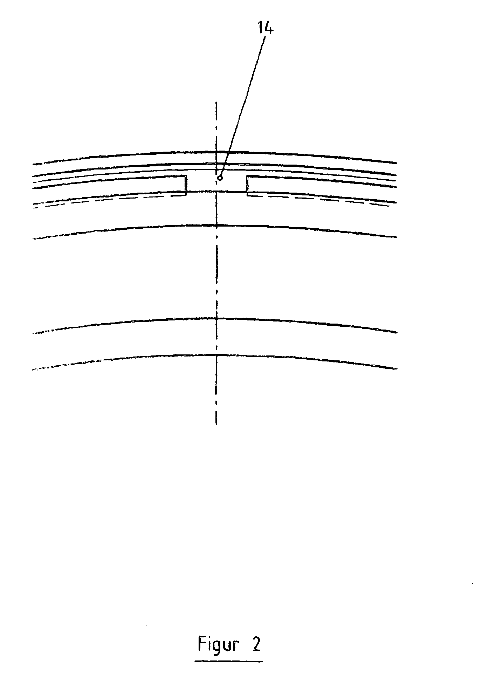

In Fig. 1 und 2 ist ein Abstreifer mit integrierter Dichtung gezeigt. Der Abstreifer mit integrierter Dichtung weist radial innenseitig die dynamisch beanspruchte erste Dichtlippe (2) und auf der dem abzudichtenden Raum (1) abgewandten Seite eine ebenfalls dynamisch beanspruchte Abstreiflippe (3) auf. Die erste Dichtlippe (2) besitzt eine scharf gestochene Dichtkante, die Abstreiflippe (3) dagegen ist mit einem Radius von 0,2 mm ausgeführt. Die Abstreiflippe (3) ist derart ausgebildet, daß sie den durch die erste Dichtlippe (2) nicht vollständig abgestreiften, auf der Stange (16) befindlichen und sehr dünnen Film von abzudichtendem Medium bei ausfahrender Stange in Richtung der Umgebung passieren läßt. Beim Einfahren der Stange (16) läßt die Abstreiflippe (3) diesen Schmiermittelfilm wieder in Richtung des abzudichtenden Raums (1) passieren, während Verunreinigungen aus der Umgebung von der Oberfläche der einfahrenden Stange abgestreift werden. Der dünne Film von abzudichtendem Medium auf der Stange (16) schmiert die Abstreiflippe (3).

Radial außen weist der Abstreifer mit integrierter Dichtung drei in einer funktionstechnischen Reihenschaltung angeordnete, quasi-statisch beanspruchte Dichtlippen (4, 5, 6) auf. Die dem abzudichtenden Raum (1) zugewandte zweite Dichtlippe (4) weist eine Oberflächenstruktur mit einer Rauhigkeit Ra von größer 2 µm auf. Die Struktur kann durch Fertigung in einem formgebenden Werkzeug mit entsprechender Oberflächenrauheit erzeugt werden, die Rauheit kann im Werkzeug leicht durch Erodieren hergestellt werden.

Die in axialer Richtung zwischen der zweiten (4) und der vierten Dichtlippe (6) angeordnete dritte Dichtlippe (5) ist durch die beiden einander durchschneidenden Kegelflächen (11, 12) begrenzt. Die erste Kegelfläche (11) schließt mit einer die dritte Dichtlippe (5) berührenden und parallel zur Achse (13) verlaufenden Linie einen ersten Winkel ein, der etwa 15° beträgt, während die zweite Kegelfläche (12) mit dieser Linie einen zweiten Winkel einschließt, der etwa 45° beträgt.

Um einen Durchtritt von abzudichtendem Medium an der dritten Dichtlippe (5) vorbei in Richtung der vierten Dichtlippe (6) zu ermöglichen, sind in diesem Ausführungsbeispiel drei gleichmäßig in Umfangsrichtung verteilte Nuten (14) vorgesehen, die sich im wesentlichen in radialer Richtung erstrecken. Dadurch ist auch dann ein Flüssigkeitsdurchtritt von der dritten Dichtlippe (5) in Richtung der vierten Dichtlippe (6) möglich, wenn der Abstreifer mit integrierter Dichtung innerhalb seines Einbauraums (8) mit seinen die Nuten begrenzenden Bereichen das Gehäuse (17) anliegend berührt.

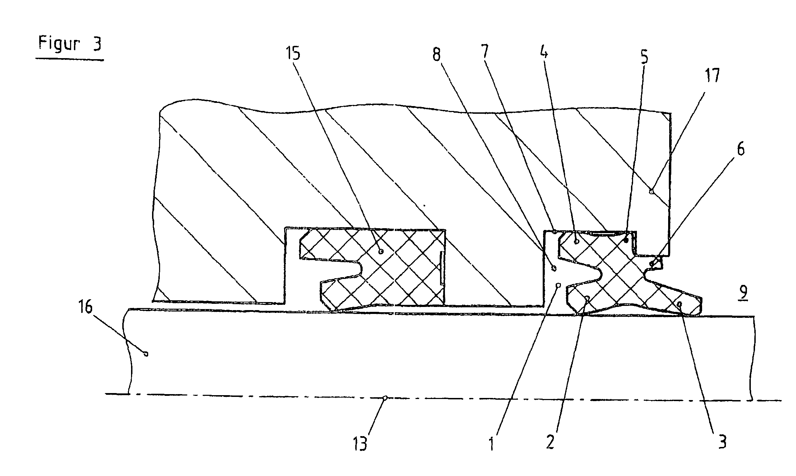

In Fig. 3 ist der Abstreifer mit integrierter Dichtung aus Fig. 1 und 2 im eingebauten Zustand gezeigt. Auf der dem abzudichtenden Raum (1) zugewandten Seite des Abstreifers mit integrierter Dichtung ist eine weitere Dichtung (15) angeordnet.

Erst dann, wenn die weitere Dichtung (15) und/oder die Oberfläche der abzudichtenden Stange (16) Verschleiß und/oder Beschädigungen aufweist, wird abzudichtendes Medium an der weiteren Dichtung (15) vorbei in Richtung des beanspruchten Abstreifers mit integrierter Dichtung und der Umgebung (9) gefördert. Um einen unerwünscht hohen Druckaufbau zwischen der weiteren Dichtung (15) und des beanspruchten Abstreifers mit integrierter Dichtung zu vermeiden, ist die zweite Dichtlippe (4) im Bereich ihrer Oberfläche mit einer rauhen, flüssigkeitsleitenden Struktur versehen und die dritte Dichtlippe (5) von ihrer Gegenfläche (7) abhebbar, ebenso wie die vierte Dichtlippe (6). Eine kostenaufwendige Druckentlastungsbohrung im Gehäuse (17) ist dadurch entbehrlich.

## Patentansprüche

1. Abstreifer mit integrierter Dichtung, umfassend zumindest eine in Richtung des abzudichtenden Raums (1) angeordnete, dynamisch beanspruchte erste Dichtlippe (2) und zumindest eine auf der dem abzudichtenden Raum (1 ) abgewandten Seite angeordnete Abstreiflippe (3) sowie drei quasi-statisch beanspruchte zweite, dritte und vierte Dichtlippen (4, 5, 6), die jeweils an zumindest einer Gegenfläche (7) des Einbauraums (8) anlegbar sind, wobei die zweite Dichtlippe (4) flüssigkeitsleitend, die dritte und vierte Dichtlippe (5, 6) jeweils als Überdruckventil ausgebildet und in einer funktionstechnischen Reihenschaltung angeordnet sind.

2. Abstreifer nach Anspruch 1, **dadurch gekennzeichnet, daß** von den quasi-statisch beanspruchten Dichtlippen (4, 5, 6) zumindest die dem abzudichtenden Raum (1) zugewandte zweite Dichtlippe (4) eine Oberflächenrauhigkeit Ra von größer 2 µm aufweist.

3. Abstreifer nach Anspruch 1, **dadurch gekennzeichnet, daß** die zweite quasi-statisch beanspruchte Dichtlippe (4) eine glatte Oberfläche mit einer Rauheit von kleiner oder gleich 2 µm aufweist und die Dichtkante mindestens eine Unterbrechung in Form einer in axialer Richtung verlaufenden Nut aufweist.

4. Abstreifer nach einem der Ansprüche 1 bis 3, **dadurch gekennzeichnet, daß** die der Umgebung (9) zugewandte vierte Dichtlippe (6) bei Überschreitung eines maximal zulässigen Überdrucks im abzudichtenden Raum (1) von ihrer Gegenfläche (7) abhebbar ist.

5. Abstreifer nach einem der Ansprüche 1 bis 4, **dadurch gekennzeichnet, daß** die funktionstechnisch zwischen der zweiten (4) und der vierten Dichtlippe (6) angeordnete dritte Dichtlippe (5) eine Dichtkante (10) aufweist, die durch zwei einander durchschneidende Kegelflächen (11, 12) begrenzt ist und daß die dem abzudichtenden Raum (1) zugewandte erste Kegelfläche (11) mit einer zur Symmetrieachse (13) parallel gedachten Achse einen kleineren Winkel einschließt als die dem abzudichtenden Raum (1) abgewandte zweite Kegelfläche (12).

6. Abstreifer nach Anspruch 5, **dadurch gekennzeichnet, daß** die erste Kegelfläche (11) mit einer zur Symmetrieachse (13) parallel gedachten Achse einen ersten Winkel von 15° einschließt.

7. Abstreifer nach Anspruch 5, **dadurch gekennzeichnet, daß** die zweite Kegelfläche (12) mit einer zur Symmetrieachse (13) parallel gedachten Achse einen zweiten Winkel von 45° einschließt.

## Claims

1. A stripper with integrated seal, comprising at least one dynamically loaded first sealing lip (2), which is arranged in the direction of the space (1) which is to be sealed, and at least one stripping lip (3), which is arranged on the side which is directed away from the space (1) which is to be sealed, and three quasi-statically loaded second, third and fourth sealing lips (4, 5, 6), which can each be positioned against at least one opposing surface (7) of the installation space (8), the second sealing lip (4) being of liquid conducting design and the third and fourth sealing lips (5, 6) each being designed as pressure relief valves, and being functionally arranged in series.

2. A stripper according to claim 1, **characterized in that**, of the quasi-statically loaded sealing lips (4, 5, 6), at least the second sealing lip (4), which is directed towards the space (1) which is to be sealed, has a surface roughness Ra greater than 2µm.

3. A stripper according to Claim 1, **characterized in that** the second quasi-statically loaded sealing lip (4) has a smooth surface with a roughness of less than or equal to 2 µm, and a sealing edge has at least one interruption in the form of an axially running groove.

4. A stripper according to any one of Claims 1 to 3, **characterized in that** the fourth sealing lip (6), which is directed towards the surroundings (9), can be raised up from its opposing surface (7) when a maximum admissible positive pressure in the space (1) which is to be sealed is exceeded.

5. A stripper according to any one of Claims 1 to 4, **characterized in that** the third sealing lip (5), which is arranged in functional terms between the second sealing lip (4) and the fourth sealing lip (6), has a sealing edge (10) which is bounded by two intersecting cone surfaces (11, 12), and **in that** the first cone surface (11), which is directed towards the space (1) which is to be sealed, encloses a smaller angle, with an imaginary axis parallel to the axis of symmetry (13), than does the second cone surface (12), which is directed away from the space (1) which is to be sealed.

6. A stripper according to Claim 5, **characterized in that** the first cone surface (11) encloses a first angle of 15º with an imaginary axis which is parallel to the axis of symmetry (13).

7. A stripper according to Claim 5, **characterized in that** the second cone surface (12) encloses a second angle of 45º with an imaginary axis which is parallel to the axis of symmetry (13).

## Revendications

1. Racleur avec joint intégré, comprenant au moins une première lèvre d'étanchéité (2) disposée en direction de l'espace (1) à rendre étanche et sollicitée de façon dynamique et au moins une lèvre de raclage (3) disposée sur le côté opposé à l'espace (1) à rendre étanche ainsi que trois seconde, troisième et quatrième lèvres d'étanchéité (4, 5, 6) sollicitées de façon quasi statique, qui peuvent être posées respectivement près d'au moins une contre-surface (7) de l'espace de montage (8), la seconde lèvre d'étanchéité (4) étant conçue de façon à guider le liquide, les troisième et quatrième lèvres d'étanchéité (5, 6) étant réalisées chacune sous la forme d'une vanne de surpression et disposées dans un montage en série fonctionnel.

2. Racleur selon la revendication 1, **caractérisé en ce que**, sur les lèvres d'étanchéité (4, 5, 6) sollicitées de façon quasi statique, au moins la seconde lèvre d'étanchéité (4) tournée vers l'espace (1) à rendre étanche, présente une rugosité de surface Ra supérieure à 2 µm.

3. Racleur selon la revendication 1, **caractérisé en ce que** la seconde lèvre d'étanchéité (4) sollicitée de façon quasi statique présente une surface lisse avec une rugosité inférieure ou égale à 2 µm et l'arête d'étanchéité présente au moins une interruption sous la forme d'une rainure agencée dans la direction axiale.

4. Racleur selon l'une quelconque des revendications 1 à 3, **caractérisé en ce que** la quatrième lèvre d'étanchéité (6) tournée vers l'environnement (9) peut être soulevée de sa contre-surface (7) en cas de dépassement d'une surpression maximale autorisée dans l'espace (1) à rendre étanche.

5. Racleur selon l'une quelconque des revendications 1 à 4, **caractérisé en ce que** la troisième lèvre d'étanchéité (5) disposée au plan fonctionnel entre la seconde (4) et la quatrième lèvre d'étanchéité (6) présente une arête d'étanchéité (10) qui est délimitée par deux surfaces coniques (11, 12) qui se coupent et **en ce que** la première surface conique (11) tournée vers l'espace (1) à rendre étanche forme avec un axe imaginaire parallèle à l'axe de symétrie (13) un angle plus petit que la seconde surface conique (12) opposée à l'espace (1) à rendre étanche,

6. Racleur selon la revendication 5, **caractérisé en ce que** la première surface conique (11) forme avec un axe imaginaire parallèle à l'axe de symétrie (13) un premier angle de 15°.

7. Racleur selon la revendication 5, **caractérisé en ce que** la seconde surface conique (12) forme avec un axe imaginaire parallèle à l'axe de symétrie (13) un second angle de 45°.
